Europäisches Patentamt

(19) European Patent Office

Office européen des brevets

(11) Publication number: **0 024 043**
**A2**

(12) # EUROPEAN PATENT APPLICATION

(21) Application number: **80104672.3**

(22) Date of filing: **07.08.80**

(51) Int. Cl.³: **F 16 H 25/24**

(30) Priority: **09.08.79 FI 792472**

(43) Date of publication of application:
**18.02.81 Bulletin 81/7**

(84) Designated Contracting States:
**CH DE FR GB LI NL SE**

(71) Applicant: **Laakko, Mikko Antero**

**Backas SF-06830 Kulloonkylä(FI)**

(72) Inventor: **Laakko, Mikko Antero**

**Backas SF-06830 Kulloonkylä(FI)**

(74) Representative: **Zipse + Habersack**
**Kemnatenstrasse 49**
**D-8000 München 19(DE)**

(54) **Apparatus for converting rotary motion to linear motion.**

(57) The invention concerns an apparatus for conversion of rotary into linear motion, comprising a screw (1,21) with exterior thread and disposed hereupon a nut (2,22) with interior thread or an equivalent member. These two present between themselves a radial play. The screw (1,21) and nut (2,22) are rotatably carried in a frame (3,23) so that the bearing housing (7,8,28) either of the screw or of the nut has been made movable in radial direction and said housing is loaded with an adjustable spring (19,20,30). The nut (1,21) and screw (2,22) will then assume a mutually eccentric position. By rotating the screw (1,21) or the nut (2,22) a rolling motion between these is accomplished. The pitch of the thread will then cause a relative longitudinal movement between the screw (1,21) and the nut (2,22). When the longitudinal movement is braked with an axial force (Fr), the eccentricity caused by the spring (19,20,30) is either partly or totally cancelled. The longitudinal movement will then slow down accordingly or entirely cease despite continued rotary motion.

FIG. 1

Croydon Printing Company Ltd.

0024043

European Patent Application-80 104672.3                OH 12-EP
Mikko Antero Laako

Apparatus for converting rotary motion to
linear motion

The present invention concerns an apparatus serving to convert rotary into linear motion, comprising a screw with exterior thread and, fitted thereupon, a nut or equivalent with interior thread, the two together presenting a certain radial play, and further comprising means for displacing the screw and nut to be eccentrically positioned with reference to each other. The screw and nut are rotatably carried in a frame or equivalent in such manner that by rotating the screw one achieves a rolling between the screw and nut and thereby an axial movement owing to the pitch of the screw.

In prior art is known, for instance, the apparatus disclosed in the German application print No. 2.261.736 by which a rotary motion can be converted into a linear motion. Said reference discloses a screw-and-nut combination with play and wherein the longitudinal motion is generated as the screw and nut roll against each other. The speed of the longi-tudinal movement is steplessly adjustable by changing the mutual eccentricity of the screw and nut.

The German application print No. 2.122.783 discloses an equivalent apparatus wherein the member corresponding to the nut has been composed of two separate bodies of annular shape. Said bodies present grooves, consistent with the thread profile, having no pitch and which have been inclined as much as is consistent with the pitch. Both bodies are rotatably carried, eccentrically with reference to the screw. In order to eliminate the play, one embodi-ment suggests a spring to be used between the bearing and the housing.

The drawback of the kinds of apparatus mentioned is that the axial force which they generate is not adjustable. In the apparatus of the German reference No. 2.122.753, the longitudinal movement is at a constant speed independent of the load.

The object of the invention is to provide an apparatus which converts rotary motion into longitudinal motion with a speed depending on the resisting force. When the resisting force attains a pre-adjustable height, the longitudinal movement ceases even if the rotary movement should continue.

As thaught by the invention, this is accomplished in that the means by the aid of which the screw and nut are displaced to be eccentrically with reference to each other comprise a bearing housing or equivalent which has been made displaceable in radial direction, and a spring by which an adjustable radial force action may be exerted on said bearing housing, whereby the axial force acting on the screw will cancel the radial force arising through effect of the friction force acting in the thread and/or due to the flank angle of the thread and will thereby centre the screw and nut with reference to each other, thus causing the longitudinal motion to cease.

Several advantages are gained by the apparatus of the invention over the means of prior art. When the screw (or the nut) is rotated at a constant speed, the longitudinal movement will stop as soon as the resisting force surpasses the force Fmax (to wit, even if the screw continues to rotate), and the motor may continue to run with low energy losses. When hereafter the rotation is stopped, the longitudinal tightening force Fmax remains permanent. When hereafter the motor is started in the opposite direction, the axial movement commences in reverse, whereby the motor torque is also low at the starting moment.

Thus, the apparatus of the invention is appropriate to be used:

- as a limit switch which stops the longitudinal motion when it reaches the extreme position;
- as a torque coupling, stopping the motion when the force resisting the movement surpasses Fmax; it is then possible to obtain a terminal tightening force such as may be desired (e.g. in valve control);
- as a safety coupling stopping the motion if the resisting force surpasses Fmax, permitting the motor to go on rotating (no inertia forces);
- as an automatic gear box, reducing the linear speed as the counterforce increases, so that overloading of the motor is prevented;

No electrical limit switches are then required, nor any control leads for them. It is expensive, particularly in a piece of machinery that has to be mounted in an area with risk of explosion, to guard against explosion the spark-generating electrical limit switches, and which are not required when the present invention is applied.

In the following, the invention is described in detail, with reference being made to the attached drawings.

Fig. 1 presents, in elevational sectional drawing, an advantageous embodiment example of the invention.

Fig. 2 shows, in eleva-tional sectional view, another advantageous embodiment example of the invention.

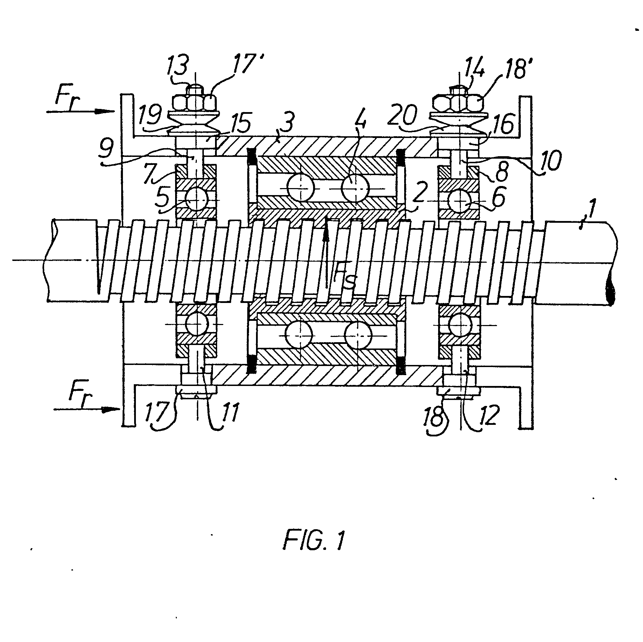

The embodiment example of Fig. 1 comprises a srew 1, which is being rotated. The ring-shaped nut 2 is rotatably carried in an annular frame 3 with the aid of the bearing 4. The bearings 5 and 6 support the frame, which does not rotate. The bearings 5 and 6 have been mounted with close fit in the rings 7 and 8, carrying integral pins 9,10,11,12, with the aid of which said rings 7 and 8 have been turnably mounted in the frame 3. The pins 9 and 10 carry threads 13 and 14. The sleeves 15 and 16, and 17 and 18, hold the pins 9,10,11,12, in position in the direction of the screw axis. The nuts 17' and 18' are used to tighten the bearings 5 and 6 with the aid of the cup springs 19 and 20, so that the nut 2 is one-sidedly elastically urged against the screw 1.

When the screw 1 is rotated with constant speed, it will roll nearly free of friction against one side of the nut, the rolling radius being slightly larger in the nut 2 than on the screw 1. As a result, for each turn of the screw the nut will rotate through slightly less than one turn and whereby the screw will move in its axial direction forward with reference to the nut, through a distance equivalent to this lag. If the force Fr acting on the frame increases, the force Fs which is active in the radial direction of the nut 2 will also increase even though the thread is a flat thread, because by effect of the spring force _ the thread flanks of the nut must unavoidably penetrate owing to the rotary motion against the friction into the grooves of the screw's thread. Thereby when the force Fr increases, the springs 19 and 20 will yield and the centre-line of the nut 2 will move closer to the centre-line of the screw 1, causing the above-mentioned lag to be reduced, and ultimately at the force Frmax, the said centre-line will coincide. The lag has then gone down to zero and the motion of the nut 2 in the axial direction of the screw has stopped even though the screw 1 is rotating because nut and screw are then rotating with equal speeds. Losses are then encountered at the bearings only. The screw is not compelled to slide in its axial direction against the inner surfaces of the bearings 7 and 8, because the screw has been urged to be adjacent to one side of these bearings, and the bearings can, held in the pins 9,10, 11,12, assume a slightly slanting position so that rotation of the bearing will carry them forward without sliding with a speed consistent with the total pitch of the shifting nut. It is thus understood that the bearings 5 and 6 are automatically positioned, carried by the pins 9,10,11,12, at an angle such that the screw will not slide and no friction losses will be incurred even if the speed of the screw's axial movement varies.

It is thus understood that with the design just described, the useful force is taken out from the non-rotating frame while the screw is rotating and the nut is tightly rotatably carried in the frame, but with the supporting bearings 5 and 6 elastically affixed to the frame.

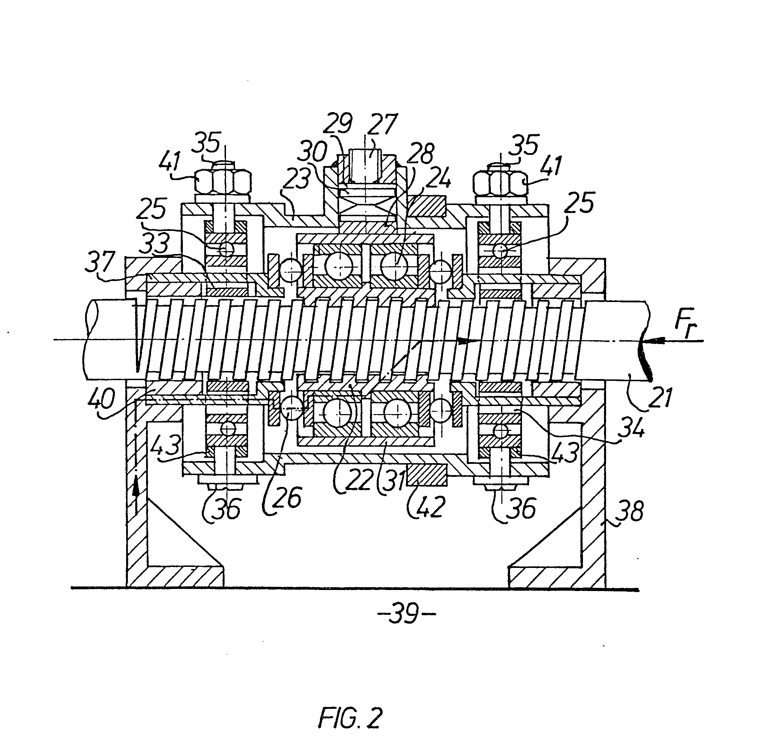

Another possibility is: to take the force off from the non-rotating screw, in which case the frame is rotated, and the nut is elastically affixed to the frame, as shown in Fig. 2. The screw 21 is in this example non rotating and is thus only free to move longitudinally. The nut 22 has been affixed to the frame 23 by the bearing arrangement 24, the frame being rotated. The bearings 25 stay the frame with the aid of sleeves 33 against the screw 21. The bearings 26 take upthe axial force which is transmitted along the interrupted line drawn in Fig. 2, from the stationary base over the bearing stands 38, sleeves 37, bearings 26 and nut 22 to the screw 21. It should be noted here that this force passes through the bearing 26 only, and no losses due to the axial force are incurred in any other bearings. Morover, as will be seen later on, the bearing 26 only transmits a very slow rotary motion, whereby the bearing losses caused by the axial useful force Fr are exceedingly low. The carrying surfaces of the bearings 26 along which the balls roll are plain, that is without groove, and for this reason the nut 22 may freely move in radial direction, whereby the nut 22 can be urged with ease by the aid of the screw 27, with the aid of sleeves 28 and 29 and springs 30 and the sleeve 31, elastically against the screw 21. The sleeves 33 guide the screw 21 and they are affixed to the inner circumference of the bearings 25 with close fit, with the aid of radial projections 34 passing through the sleeve 37, these bearings 25 in their turn being turnably affixed to the frame 23 with the aid of pins 35 and 36 and sleeves 43. The sleeves 37 transmit the axial force from the bearing stands 38 and from the base 39 to the other half of the bearing 26. The sleeves 40 maintain the screw radially in its place with reference to the base 39. The nut 41 is used to centre the screw 21 in the frame. The ring 42 is a belt pulley, the nut being rotated e.g. with a motor over this pulley and a belt.

When with the aid of the screws 27 the nut is urged tight against the screw with its one side, the sleeves 33 will correspondingly be urged fast to the flank of the screw on the opposite side, guided by the pins 35 and 36 and by the bearings 25. The sleeves 33 may move both axially and radially to the screw 21 within the sleeve 37, whereby the sleeve 33 transmits only the radial force 23 to the screw 21, not the axial force which goes from the nut over the sleeve 37 to the bearing stand. The above mentioned play also permits wearing down of the sleeve 33 without such wearing causing any increase of eccentricity with regard to the screw, giving rise to vibration as the screw is rotated. When the frame is being rotated, the nut 22 rolls along the surface of the screw 21, and a lag is incurred like in the case of Fig. 1. The screw is not allowed to rotate, and therefore the nut, too, rotates very slowly. It is thus understood that both rings of the bearing 26 have only a very low speed of rotation relative to each other; in addition, one ring moves with reference to the other along a circular path, the radius of this circle equalling the distance between the screw and nut centre-lines. The other ring of the bearing 26 does not rotate, it being affixed to the sleeve 37, which is integral with the screw. The screw moves in its axial direction without rotating, and the useful force may be taken off therefrom. The sleeves 33 are urged with one side against the screw, and a play is generated between the opposite side of the screw and the sleeve, this gap revolving like the frame. The screw then needs not slide in said sleeve 33: instead, the sleeve rolls along the surface of the screw. Vibration of the sleeve 33 is not carried to the frame or to the screw, the gap between the sleeves 33 and 37 permitting such vibration. The bearing stand 38 keeps the screw in its position. The frame 23 has been centred with reference to the screw by means of the nuts 41.

In the cases of Fig. 1 and 2, the shape of the thread may also be another than a flat thread, but in that case the force deflecting the nut must generally be higher, related to the axial useful force, because the flank angle of the thread gives rise to a radial extra force acting on the nut. The best thread form is believed to be a flat thread because in that case the radial force is low and, as experience has thaught, the risk of vibration of the nut is also minimized.

European Patent Application 80 104672.3          OH 12-EP
Mikko Antero Laako

C l a i m s :

1.Apparatus for converting rotary motion to linear motion, comprising a screw (1,21) with exterior thread and, disposed thereupon, a nut (2,22) with interior thread or an equivalent member, these two presenting a play between themselves, and means for displacing the screw (1,21) and the nut (2,22) into an eccentric position with reference to each other, said screw and nut being so rotatably carried in a frame (3,23) or equivalent that by rotating the screw or the nut is achieved a rolling motion between the screw and the nut and hereby, owing to the pitch of the thread, a relative axial movement, c h a r a c t e - r i z e d  in that the means by which the screw and the nut are displaced into a mutually eccentric position comprise a bearing housing (7,8,28) or equivalent which has been made radially displaceable, and a spring (19,20,30) by which it is possible to cause a controllable radial force action on said bearing housing, whereby the axial force acting on the screw (1,21) will cancel the radial force arising through effect of the friction acting in the thread and/or due to the flank angle of the thread and will thereby centre the screw and nut with reference to each other, thus causing the longitudinal motion to cease.

2.Apparatus according to claim 1, wherein the screw (1) is rotated with reference to the frame (3), c h a - r a c t e r i z e d  in that the bearings (5,6) giving support to the screw (1)have been mounted on pins (9,10,11, 12) disposed at right angles with reference to the screw axis, and the springs producing a force action radial to the screw are cup springs (19,20) placed around the pins (9,10).

3.Apparatus according to claim 1, wherein the screw (21) is non-rotating with reference to the frame (23) and the nut is displaceable radially to the screw, c h a r a c- t e r i z e d  in that the nut (22) is in axial direction supported by bearings (26).

1 / 2

FIG. 1

2/2

FIG. 2